(19) **Europäisches Patentamt European Patent Office Office européen des brevets**

(11) **EP 3 147 820 B1**

(12) **EUROPEAN PATENT SPECIFICATION**

(45) Date of publication and mention of the grant of the patent:
**13.05.2020 Bulletin 2020/20**

(51) Int Cl.:
*G06K 9/00* (2006.01)          *G06K 9/48* (2006.01)
*G06T 7/20* (2017.01)          *G06K 9/62* (2006.01)

(21) Application number: **16185664.6**

(22) Date of filing: **25.08.2016**

(54) **OBJECT TRACKING METHOD, DEVICE, AND SYSTEM AS WELL AS RELEVANT PROGRAM AND NON-TRANSITORY COMPUTER-READABLE MEDIUM**

OBJEKTVERFOLGUNGSVERFAHREN, VORRICHTUNG UND SYSTEM SOWIE DAZUGEHÖRIGES PROGRAMM UND ÜBERGANGSLOSES COMPUTERLESBARES MEDIUM

PROCÉDÉ DE SUIVI D'OBJET, DISPOSITIF ET SYSTÈME AINSI QUE PROGRAMME PERTINENT ET SUPPORT LISIBLE PAR ORDINATEUR NON TRANSITOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2015 CN 201510622651**

(43) Date of publication of application:
**29.03.2017 Bulletin 2017/13**

(73) Proprietor: **Ricoh Company, Ltd.**
**Tokyo 143-8555 (JP)**

(72) Inventors:
  • **YOU, Ganmei**
    **Haidian District, Beijing 100044 (CN)**
  • **LU, Yaojie**
    **Haidian District, Beijing 100044 (CN)**
  • **CHEN, Chao**
    **Haidian District, Beijing 100044 (CN)**
  • **LIU, Dianchao**
    **Haidian District, Beijing 100044 (CN)**
  • **SHI, Zhongchao**
    **Haidian District, Beijing 100044 (CN)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
  • **ALPER YILMAZ ET AL: "Object tracking", ACM COMPUTING SURVEYS, ACM, NEW YORK, NY, US, US, vol. 38, no. 4, 25 December 2006 (2006-12-25), pages 13-es, XP058090583, ISSN: 0360-0300, DOI: 10.1145/1177352.1177355**
  • **WANG J J ET AL: "Video analysis of human dynamics-a survey", REAL-TIME IMAGING, ACADEMIC PRESS LIMITED, GB, vol. 9, no. 5, 1 October 2003 (2003-10-01) , pages 320-345, XP004472531, ISSN: 1077-2014**
  • **Anonymous: "Difference between Disparity map and Disparity Image in Stereo Matching", , 12 July 2013 (2013-07-12), XP055344096, Retrieved from the Internet: URL:http://stackoverflow.com/questions/176 07312/difference-between-disparity-map-and -disparity-image-in-stereo-matching [retrieved on 2017-02-09]**

**Description**

1. Field of the Invention

The present disclosure relates to the field of computer stereo vision, more particularly relates to a method, device, and system for tracking an object in a disparity map as well as the relevant program and non-transitory computer-readable medium.

2. Description of the Related Art

The application of computer stereo vision is related to the fields of driving assistance, automatic recognition and tracking, driving early warning, and so on. In the application of computer stereo vision for intelligent driving, it is very important to track an object such as a pedestrian or an animal, particularly in a city scene. However, because of the change of the posture of the object, the change of the relevant background, and the change of the distance to the object, it is very difficult to track the object when it moves.

Therefore, it is necessary to develop a kind of technique able to track an object in a disparity map.

There is disclosed in "Object Tracking: A survey" ALPER YILMAZ et al (ACM Computing Surveys, ACM, New York, US, vol. 38, no. 4, 25 December 2006, pages 13 et. seq.) a review of state of the art tracking methods.

There is disclosed in "Video Analysis of Human Dynamics- a Survey" Wan JJ et al (Real-Time Imagine, Academic Press Limited, GB, vol. 9, no. 5, 1 October 2003) a review of the various studies in areas related to the tracking of people and body parts and modeling behavior using motion analysis".

The difference between disparity maps and disparity image in stereo matching is discussed in "Difference Between Disparity Maps and Disparity Image in Stereo Matching", Anonymous, 12 July 2013 (http://stackoverflow.com/questions/17607312/difference-between-disparity-map-and-disparity-image-in-stereo-matching.

SUMMARY OF THE INVENTION

The invention provides a method, and a device as claimed in claims 1 and 8.

A system for tracking an object in a disparity map is provided. The system may include:

a processor; and
a storage connected to the processor, storing computer-executable instructions which, when executed, cause the processor to carry out the method of the invention.

A program for causing a computer to carry out the method is provided.

A non-transitory computer-readable medium storing computer-executable instructions for execution by a processing system is provided. The computer-executable instructions, when executed, cause the processing system to carry out the method.

BRIEF DESCRIPTION OF THE DRAWINGS

FIG. 1 illustrates a hardware configuration which may be applied to the embodiments of the present disclosure;
FIG. 2 illustrates an application environment which may be applied to the embodiments of the present disclosure;
FIG. 3 is a module diagram of a device for tracking an object in a disparity map, according to an embodiment of the present disclosure;
FIG. 4 is a flowchart of a method for tracking an object in a disparity map, according to an embodiment of the present disclosure;
FIG. 5 is a system sequence diagram of a method for tracking an object in a disparity map, according to an embodiment of the present disclosure;
FIG. 6 illustrates the grayscale image of a prior object template and its disparity map as well as a current grayscale image and its disparity map;
FIG. 7 is a module diagram of a convex hull extractor;
FIGS. 8A to 8D illustrate a process of extracting convex hulls and obtaining their principal gradient directions;
FIGS. 9A to 9B illustrate a process of extracting current limb convex hulls from a surrounding region of a current torso portion in a current frame;
FIG. 10 illustrates a process of rotating the principal gradient directions of two current limb convex hulls so as to let them be consistent with the principal gradient direction of a prior limb convex hull;

FIG. 11 illustrates a result obtained by detecting an object in a current image; and

FIG. 12 illustrates a system for tracking an object in a disparity map, according to an embodiment of the present disclosure.

DETAILED DESCRIPTION OF THE PREFERRED EMBODIMENTS

In order to let those people skilled in the art better understand the present disclosure, hereinafter, the embodiments of the present disclosure will be concretely described with reference to the drawings. However it should be noted that the same symbols, which are in the specification and the drawings, stand for the constructional elements having basically the same function and structure, and the repeated explanations for the constructional elements are omitted.

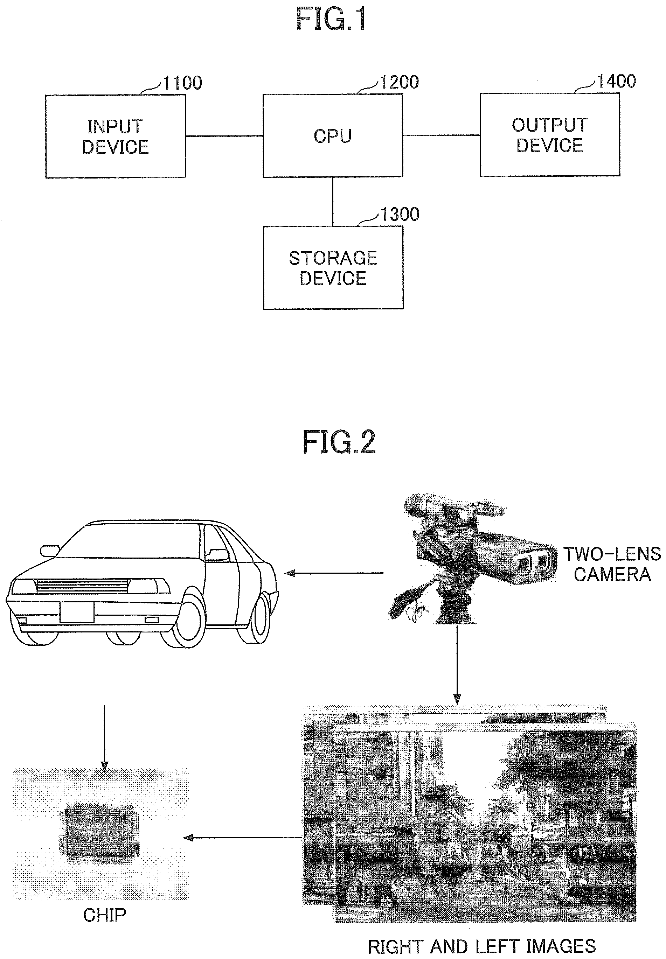

FIG. 1 illustrates a hardware configuration which may be applied to the embodiments of the present disclosure.

As presented in FIG. 1, the hardware configuration includes an input device 1100, a CPU (Central Processing Unit) 1200, a storage device 1300, and an output device 1400.

The input device 1100 may be configured to input a disparity map, road's vanishing point/line related information, etc. The central processing unit 1200 may be configured to execute an object tracking method according to the embodiments of the present disclosure. The storage device 1300 may be configured to store the relevant data and information. And the output device 1400 may be configured to output the tracked object.

FIG. 2 illustrates an application environment which may be applied to the embodiments of the present disclosure.

As presented in FIG. 2, a two-lens camera may be mounted on a vehicle, and may be used to obtain right and left images. In addition, a chip may be utilized to conduct an object tracking method according to the embodiments of the present disclosure.

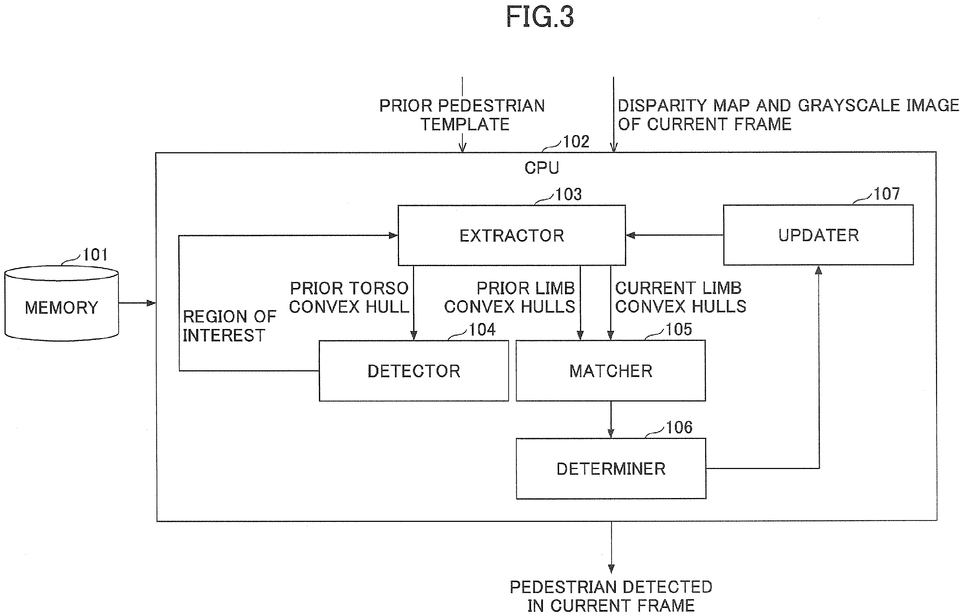

FIG. 3 is a module diagram of an object tracking device according to an embodiment of the present disclosure.

As presented in FIG. 3, an object template (including its disparity map and its grayscale image) detected from a historical (prior) frame (image) as well as the disparity map and the grayscale image of a current frame are input and stored in the memory 101. Here it should be noted that in what follows, a pedestrian template is taken as an example of the object template. However, the present disclosure is not limited to this. The object may also include an animal having a torso and limbs, for example.

In the central processing unit (CPU) 102, five modules, i.e., a convex hull extractor (also called an "extractor" for short) 103, a torso portion detector (also called a "detector" for short) 104, a convex hull matcher (also called a "matcher" for short) 105, an object determiner (also called a "determiner" for short) 106, and an object template updater (also called an "updater" for short) 107 which is optional, may be used to process the relevant data and information, so as to output the tracked object in the current frame.

The extractor 103 may be configured to extract prior convex hulls in a pedestrian template (i.e., the object template) of the prior frame (also called a "prior pedestrian template"). The prior convex hulls may include at least a prior torso convex hull and prior limb convex hulls. In particular, the extractor 103 may extract disparity-related connected components and their disparity-related outlines from the disparity map of the pedestrian template, then extract the principal gradient directions of the disparity-related outlines, and then extract the prior convex hulls on the grounds of the principal gradient directions. Aside from this, the extractor 103 may also be configured to extract current limb convex hulls from a surrounding region of a current torso portion in the current frame.

Here it should be noted that since the concept of a convex hull is well known to those skilled in the art, the detailed description is omitted. For more information, it is also possible to see https://en.wikipedia.org/wiki/Convex hull.

In addition, how to extract a convex hull is also well known to those skilled in the art. For example, it is possible to adopt the Gift wrapping algorithm, the Graham's scan algorithm, or the Melkman's algorithm to carry out convex hull extraction. Here, for the sake of convenience, the detailed description is also omitted.

The detector 104 may be configured to detect the current torso portion in the current frame on the basis of the grayscale feature and/or the disparity feature of the prior torso convex hull in the prior frame.

After that, the extractor 103 may extract the current limb convex hulls from the surrounding region of the current torso portion in the current frame.

The matcher 105 may be configured to first calculate the difference between the principal gradient direction of each prior limb convex hull in the prior pedestrian template and the principal gradient direction of each current limb convex hull at the surrounding region of the current torso portion in the current frame; then rotate the current limb convex hulls at the surrounding region of the current torso portion in the current frame so as to let their principal gradient directions be consistent with the principal gradient direction of each prior limb convex hull in the prior pedestrian template; and then calculate the similarities between the images within the current limb convex hulls at the surrounding region of the current torso portion in the current frame and the image within each prior limb convex hull in the prior pedestrian template. In this way, it is possible to determine the current limb convex hulls having the highest similarities, at the surrounding region of the current torso portion in the current frame as matched ones of the prior limb convex hulls in the prior pedestrian template, respectively. In other words, the inputs are the prior limb convex hulls in the prior pedestrian template and the current limb convex hulls at the surrounding region of the current torso portion in the current frame, and the outputs are the matched current limb convex hulls at the surrounding region of the current torso portion in the current frame, corresponding to the prior limb convex hulls in the prior pedestrian template.

The determiner 106 may be configured to determine, based on the matched current limb convex hulls, the position of the pedestrian in the current image. That is, the inputs are the matched current limb convex hulls, and the output is the pedestrian determined in the current image.

The updater 107 may be configured to update the prior pedestrian template so as to obtain a current pedestrian template including the pedestrian in the current image, so that the current pedestrian template may serve as the prior pedestrian template of the next input frame. In other words, the inputs are the pedestrian determined in the current frame and the prior pedestrian template of the prior frame, and the output is the current pedestrian template including the pedestrian in the current frame.

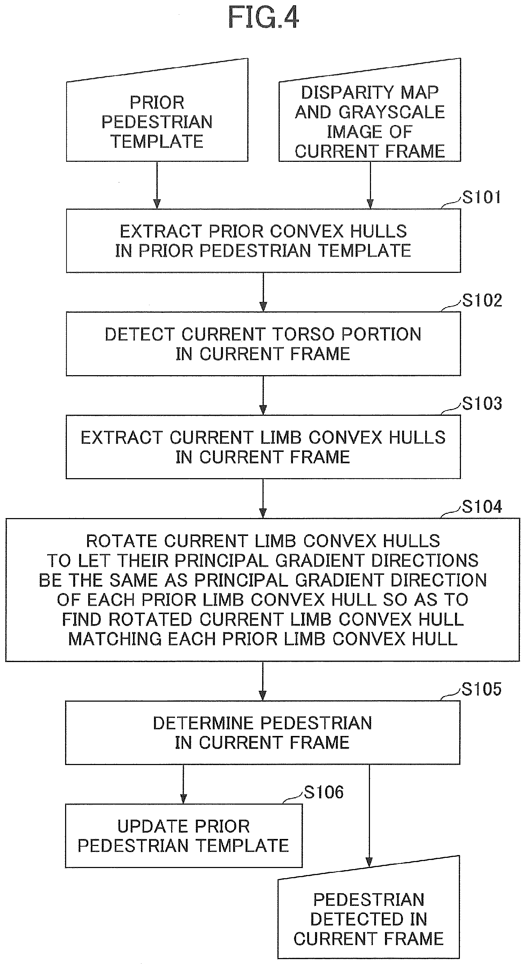

FIG. 4 is a flowchart of an object tracking method according to an embodiment of the present disclosure.

The inputs are a prior pedestrian template (including its disparity map and its grayscale image) of a prior frame (image) as well as the disparity map and the grayscale image of a current frame (image).

First prior convex hulls (including at least a prior torso convex hull and prior limb convex hulls) in the prior pedestrian template are extracted (STEP S101; also called a "first extraction step"). Then a portion in the current frame, corresponding to the prior torso convex hull is detected so as to serve as a current torso portion (STEP S102; also called a "detection step"). And then, current limb convex hulls at a surrounding region of the current torso portion in the current frame are extracted (STEP S103; also called a "second extraction step"). After that, on the grounds of the principal gradient directions of the current limb convex hulls and the prior limb convex hulls, regarding each of the prior limb convex hulls, the principal gradient directions of the current limb convex hulls are rotated to be consistent with the principal gradient direction of the corresponding prior limb convex hull so as to seek a rotated current limb convex hull matching the corresponding prior limb convex hull (STEP S104; also called a "rotation step"). Finally, on the basis of the matched results, the positions of the limbs of the pedestrian in the current image are determined so as to determine the position of the pedestrian in the current image for realizing object tracking (STEP S105; also called a "determination step"). Optionally the prior pedestrian template is updated so as to acquire a current pedestrian template in the current frame (STEP S106; also called an "update step").

Here it should be noted that STEPS S101 to S106 in FIG. 4 may be implemented by the extractor 103, the detector 104, the extractor 103, the matcher 105, the determiner 106, and the updater 107 in FIG. 3, respectively.

In this way, since the torso portion of the pedestrian is usually unchanged when he/she moves, it is possible to utilize the prior pedestrian object template to detect the current torso portion of the pedestrian in the current frame so as to easily and accurately determine the position of the pedestrian in the current frame. Moreover, by extracting the current limb convex hulls from the surrounding portion of the current torso portion in the current frame, it is possible to accurately acquire the current limb convex hulls; that is, some noise-related convex hulls such as a trash can related convex hull and a bicycle related convex hull on the side of the relevant road may be easily excluded. Furthermore, by analyzing the differences between the principal gradient directions of the current limb convex hulls in the current frame and the principal gradient directions of the prior limb convex hulls in the prior frame and rotating the principal gradient directions of the current limb convex hulls in the current frame to be consistent with the principal gradient direction of each of the prior limb convex hulls (e.g., a known right leg convex hull) in the prior frame, it is possible to easily determine whether the current limb convex hulls in the current frame match the respective prior limb convex hulls. In this way, it is possible to accurately determine which prior limb convex hull in the prior frame each of the current convex hulls in the current frame matches, so that it is possible to determine the exact positions of the limbs of the pedestrian in the current frame so as to determine the position of the pedestrian in the current frame. After that, by updating the prior pedestrian template so as to get a current pedestrian template including the pedestrian in the current frame, it is also possible to let the object detection and tracking process conducted with respect to the next input frame be easier and more accurate. As a result, the object detection and tracking process according to the embodiments of the present disclosure is accurate and easy to perform, and its calculation amount and time may be dramatically reduced.

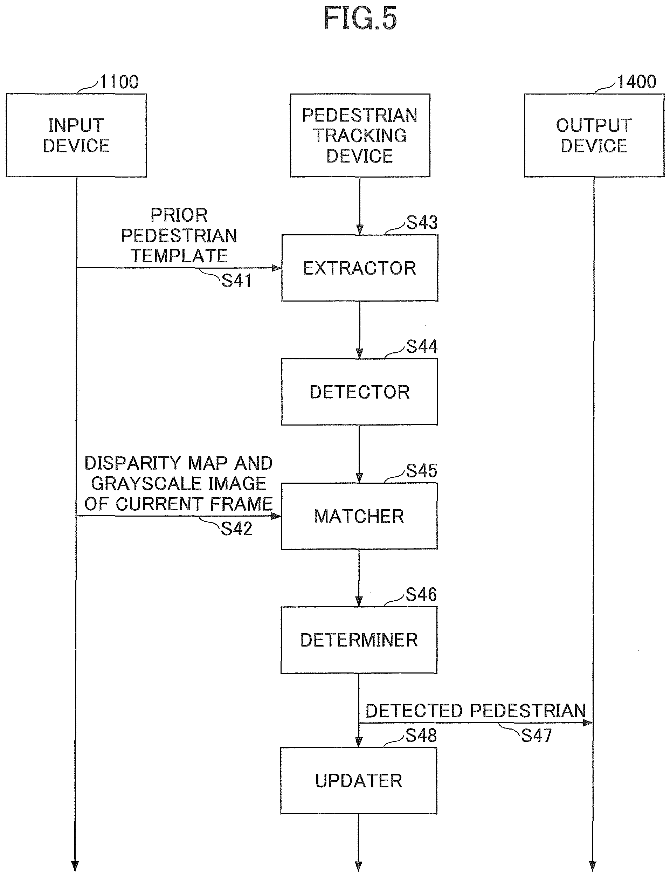

FIG. 5 is a system sequence diagram of an object tracking method according to an embodiment of the present disclosure.

As presented in FIG. 5, the input unit 1100 may input a prior pedestrian template (including its disparity map and its grayscale image) detected in a historical (prior) frame (STEP S41) as well as the disparity map and the grayscale image of a current frame (STEP S42).

In the pedestrian tracking device, the extractor extracts prior convex hulls (including at least a prior torso convex hull and prior limb convex hulls) from the prior pedestrian template (STEP S43). The detector detects a current torso portion of the pedestrian in the current frame, corresponding to the prior torso convex hull in the prior frame (STEP S44). The matcher conducts a matching process with respect to the prior limb convex hulls extracted from the prior pedestrian template and the current limb convex hulls extracted from a surrounding region of the current torso portion in the current frame (STEP S45). The determiner determines the position of the pedestrian in the current frame on the basis of the result of the matching process (STEP S46). Here the detected pedestrian in the current frame may be output by the output unit 1400 (STEP S47). After that, the updater updates the prior pedestrian template so as to get a current pedestrian template (STEP S48).

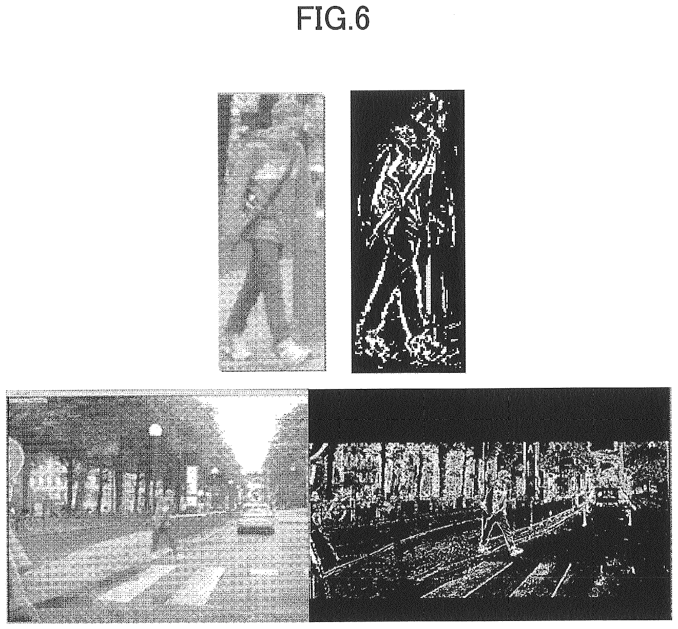

FIG. 6 illustrates the grayscale image and the disparity map of a prior pedestrian template as well as the grayscale image and the disparity map of a current frame.

On the top of FIG. 6 are the grayscale image and the disparity map of the prior pedestrian template. This prior pedestrian template is known, and may be one input from the outside, one defined by a user, or one updated according to the embodiments of the present disclosure.

In addition, on the bottom of FIG. 6 are the grayscale image and the disparity map of the current frame. In the embodiments of the present disclosure, it is possible to detect the position of the pedestrian in the current frame, matching the prior pedestrian template of the prior frame, as described above.

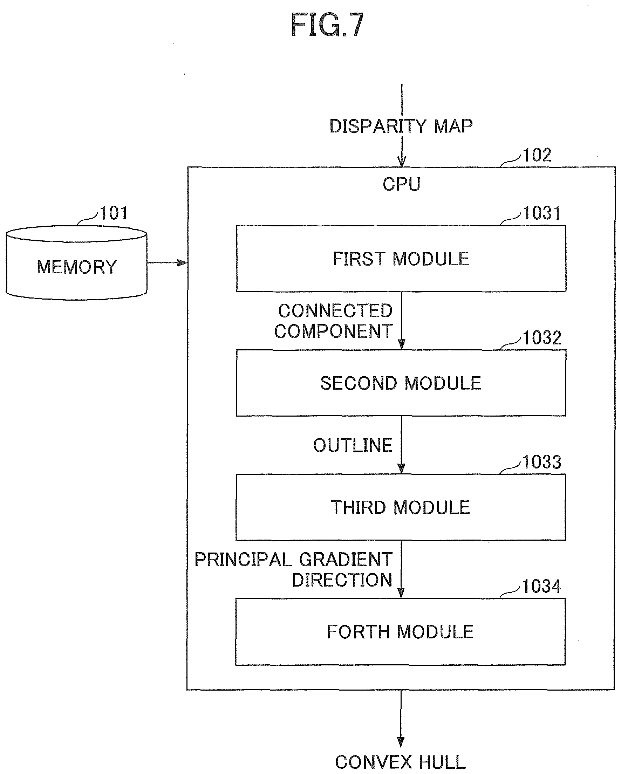

FIG. 7 is a module diagram of the extractor (i.e., the convex hull extractor).

As presented in FIG. 7, the input is a disparity map which is usually a sparse one. The sparse disparity map may be obtained by using a conventional technique, for example, image pre-processing, feature extraction, or point/feature matching. Since it is not necessary to acquire a dense disparity map, it is possible to further reduce the amount of calculation and speed up the calculation process.

The output is a convex hull.

In particular, the first module (also called a "connected component extraction module") 1031 may extract a connected component from the disparity map. The second module (also called an "outline extraction module") 1032 may extract the outline of the connected component. The third module (also called a "principal gradient direction extraction module") 1033 may extract the principal gradient direction of the outline. The fourth module (also called a "convex hull extraction module") 1034 may extract the convex hull on the grounds of the principal gradient direction of the outline.

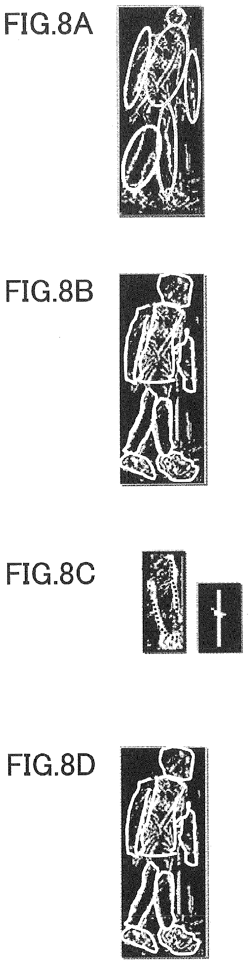

FIGS. 8A to 8D illustrate a process of extracting convex hulls and obtaining their principal gradient directions.

As described above, in STEP S101 of FIG. 4, it is possible to extract prior convex hulls from the disparity map of a prior pedestrian template. Here, since it is possible to adopt a conventional algorithm, for example, the Gift wrapping algorithm, the Graham's scan algorithm, or the Melkman's algorithm to carry out convex hull extraction, the detailed description is omitted for the sake of convenience.

As is well known, one of the characteristics of a convex hull is that any point on any line segment, whose two ends are located within the convex hull, is also within the convex hull. As such, the prior convex hulls extracted from the prior pedestrian template may well express the torso, the limbs (e.g., the hands and the legs), the head, etc., of the pedestrian. In addition, the prior limb convex hulls of the pedestrian may be divided into upper arm convex hulls, lower arm convex hulls, hand palm convex hulls, upper leg convex hulls, lower leg convex hulls, foot convex hulls, and so on. As such, for example, in a case where the upper arm and the lower arm of an arm form an angle (e.g., 120 degrees), a convex hull containing the upper convex hull and another convex hull containing the lower arm convex hull may be extracted, and the angle generated by these two convex hulls may also be the same angle (e.g., 120 degrees).

As a result, even if the angle formed by the upper arm and the lower arm of the arm of the pedestrian in the current frame is changed, for example, becomes 150 degrees, it is also possible to conduct the above-described rotation step (i.e., STEP S104 in FIG. 4) so as to obtain a good matching result. However, in the conventional technique, since the whole arm in the current frame is compared with the whole arm in the prior pedestrian template when determining whether the two match each other, if the angle generated by the upper and lower arms of the arm in the current frame is different from the angle formed by the two in the prior pedestrian template, then it may be impossible to get a correct matching result.

Particularly, in STEP S101 of FIG. 4, the connected component extraction module 1031 may extract connected components from the disparity map of the prior pedestrian template. The outline extraction module 1032 may extract the outlines of the connected components. The principal gradient direction extraction module 1033 may extract the principal gradient directions of the outlines. And the convex hull extraction module 1034 may extract the prior convex hulls on the basis of the principal gradient directions of the outlines.

In what follows, the process of STEP S101 in FIG. 4 will be depicted in detail.

First a CCA (Connected Component Analysis) approach is utilized for extracting the connected components from the disparity map of the prior pedestrian template. In order to seek all the connected components in the disparity map, it is possible to adopt a BFS (Breadth First Search) algorithm. Since more information about the CCA approach and the BFS algorithm may be accessed by referring to https://en.wikipedia.org/wiki/Connected_component_(graph theory), the repeated description is omitted for the sake of convenience. Here it should be noted that each of the connected components is a disparity-related one. In addition, the connected components extracted are presented in FIG. 8A in which each circle/ellipse represents a connected component.

Next the outline of each of the connected components may be extracted, as presented in FIG. 8B. Of course, each outline is also a disparity-related one.

After that, the principal gradient direction of each of the outlines may be extracted, as presented in FIG. 8C. Here it should be noted that the principal gradient direction is a grayscale-related one which will be described in detail as follows.

In the grayscale image of the prior pedestrian template, each pixel on each of the outlines of the connected components has a grayscale value (level). According to the following formula (1), it is possible to calculate the grayscale gradient of each pixel on one of the outline, as presented in the left image of FIG. 8C.

$$gradient(x, y) = \frac{g(x, y+1) - g(x, y-1)}{g(x+1, y) - g(x, y-1)} \qquad (1)$$

Here, gradient(x,y) refers to the grayscale gradient of a pixel (x,y), and g(x,y) stands for the grayscale value of the pixel (x,y).

The principal gradient direction may be determined as follows. It is possible to divide a 360 degree space into plural subspaces each of which is a predetermined degree subspace. The predetermined degree subspace may be a 20 degree subspace, for example. In this case, the 360 degree space may be divided into subspaces [0,20], [20,40], and so on. After that, the number of pixels whose grayscale gradients are located in each subspace is counted, and a subspace having the maximum number of pixels is selected to serve as the principal gradient direction.

For example, as presented in the right image of FIG. 8C, the number of pixels whose grayscale gradients are located in a subspace [80,100] is maximum. Here it should be noted that the points forming the white line in the right image of FIG. 8C corresponds to the pixels located in the subspace. The longer the white line is, the bigger the number of pixels is.

Of course, the formula (1) and the principal gradient direction mentioned above are two-dimensional ones. However, the present disclosure is not limited to this. Actually it is possible to know the relevant distance information from the disparity map of the prior pedestrian template, so it is also possible to adopt a three-dimensional principal gradient direction, and the follow-on rotation process is also a three-dimensional one.

In this case, the three-dimensional grayscale gradient of each pixel on one of the outlines of the connected components may be calculated based on the following formulas (2) and (3).

$$gradient(x, y) = \frac{g(x, y+1) - g(x, y-1)}{g(x+1, y) - g(x, y-1)} \qquad (2)$$

$$gradient(z, y) = \frac{g(z, y+1) - g(z, y-1)}{g(z+1, y) - g(z, y-1)} \qquad (3)$$

After that, it is possible to derive an angle $\theta$ on the X-Y plane from the formula (2), and an angle $\alpha$ on the Z-Y plane from the formula (3). As such, the follow-on rotation process may be successively conducted in the X-Y and Z-Y planes so as to realize the purpose of rotation in the three-dimensional space. In this way, it is possible to rotate a current convex hull so as to let its principal gradient direction be in the three-dimensional space in which the prior convex hulls are located, so that it is possible to acquire a more accurate matching result.

Finally the prior convex hulls are extracted on the grounds of the principal gradient directions of the outlines of the connected components.

In particular, the connected components are taken out on the basis of the principal gradient directions so that each of the connected components has only one principal gradient direction. In this way, it is possible to obtain the prior convex hulls, as presented in FIG. 8D. Here it should be noted that in the embodiments of the present disclosure, the principal gradient direction of each of the prior convex hulls is reflected by the grayscale-related principal gradient directions of the pixels in the corresponding convex hull.

For example, the principal gradient direction of the convex hull of an upper arm when the upper arm is vertical to the ground is also vertical to the ground, and the principal gradient direction of the convex hull of a lower arm when the lower arm is horizontal to the ground is also horizontal to the ground. As such, it is possible to easily use the principal gradient directions to estimate the orientation of the prior convex hulls (which are usually the long-side directions of the prior convex hulls).

As a result, by the above-describe step, it is possible to rapidly extract the prior convex hulls from the prior pedestrian template and obtain the principal gradient direction of each of the prior convex hulls.

Here it should be noted that as described above, the convex hull extraction process is carried out twice, namely, when extracting the prior convex hulls from the pedestrian template of the prior frame and when extracting the convex limb convex hulls from the surrounding region of the current torso portion in the current frame. In STEP S101 of FIG. 4, the convex hull extraction process is conducted with respect to only the pedestrian template of the prior frame so as to acquire the prior convex hulls including at least a prior torso convex hull, prior limb convex hulls, a prior head convex hull, etc.

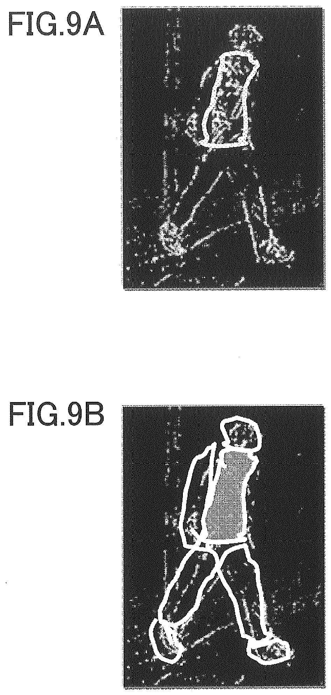

FIGS. 9A and 9B illustrate a process of extracting current limb convex hulls from a surrounding region of a current torso portion in the current image.

First a convex hull of the current torso portion in the current image is sought on the basis of the prior torso convex hull in the prior pedestrian template so as to serve as a current torso convex hull in the current frame (STEP S102 of FIG. 4).

Here it is possible to use the distance information of the prior torso convex hull obtained from the disparity map of the prior pedestrian template so as to determine a region of interest in the current frame. In general, the region of interest should be within a predetermined range of distance, the difference between any value in the predetermined range of distance and the distance of the prior torso convex hull being relatively small. The reason is that the walking velocity or the moving velocity of the pedestrian may be estimated, i.e., has a certain range. As such, seeking the convex hull of the current torso portion in the region of interest within the predetermined range of distance may have a better efficiency, save time, reduce the amount of calculation, and improve the accuracy of search.

In addition, it is also possible to conduct a template matching process based on the color of the torso portion in the prior frame so as to find a corresponding torso portion in the current frame to serve as the current torso portion therein. Generally speaking, the torso portion of the pedestrian is unchanged when he/she walks. As such, the torso portion of the pedestrian in the current frame may be detected by utilizing the prior pedestrian template of the prior frame, and the detection accuracy is also better.

Next a surrounding region of the current torso portion in the current frame is divided into convex hulls. That is, the convex hulls are extracted from the surrounding region of the current torso portion so as so serve as current limb convex hulls in the current frame (STEP S103 of FIG. 4).

In particular, it is possible to use the convex hull extraction algorithm described above by referring to FIGS. 7 and 8A to 8D to divide the surrounding region of the current torso portion in the current frame into convex hulls. Here it should be noted that by extracting the convex hulls from the surrounding region of the current torso portion in the current frame, it is possible to accurately obtain the current limb convex hulls, i.e., it is possible to easily remove some noise related convex hulls such as a trash can related convex hull and a bicycle related convex hull on the side of the relevant road.

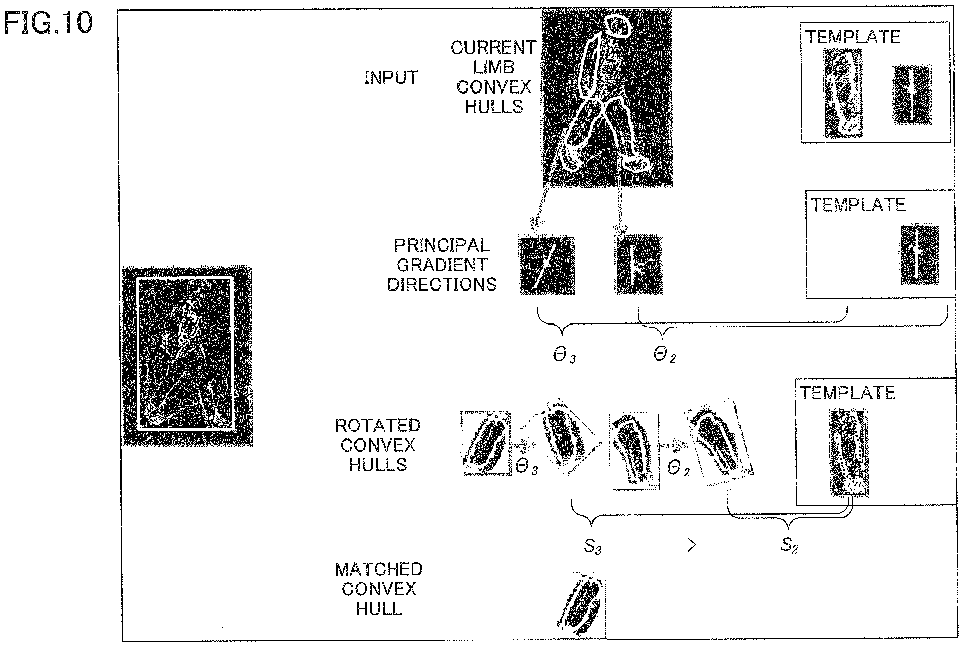

FIG. 10 illustrates a process of rotating the principal gradient directions of two current limb convex hulls so as to let them be consistent with the principal gradient direction of a prior limb convex hull.

First a rotation process is conducted with respect to the prior limb convex hulls in the prior pedestrian template of the prior frame and the current limb convex hulls at the surrounding region of the current torso portion in the current frame on the grounds of their principal gradient directions (STEP S104 of FIG. 4).

Here the left lower leg of the pedestrian is taken as an example. In FIG. 10, first the current limb convex hulls at the surrounding region (i.e., the region of interest) of the current portion in the current frame and the prior left lower leg convex hull in the prior pedestrian template of the prior frame (see the top of FIG. 10) are input. Here, regarding the prior left lower leg convex hull, its outline and principal gradient direction may be acquired in the above-described convex hull extraction process. Then, by calculating the differences $\theta_2$ and $\theta_3$ between the principal gradient direction of the prior left lower leg and the principal gradient directions of two current limb convex hulls at the region of interest in the current frame, it is possible to rotate the two current limb convex hulls on the basis of the differences $\theta_2$ and $\theta_3$ so as to let their principal gradient directions be the same as the principal gradient direction of the prior left lower leg convex hull. And then, an image matching process is carried out so as to obtain two similarities $S_2$ and $S_3$ between the two rotated current limb convex hulls and the prior left lower leg convex hull. As a result, it is possible to find one of the two current limb convex hulls after rotation which is more similar to the prior left lower leg convex hull so as to serve as the tracked left lower leg in the current frame. In FIG. 10, the current limb convex hull corresponding to the similarity S3 is chosen as the tracked left lower leg in the current frame because the similarity $S_3$ is greater than the similarity $S_2$. Here it should be noted that since there are many well-known approaches capable of realizing the image matching process such as a color feature based one, a shape feature based one, a gradient feature based one, and so forth, the detailed descriptions are omitted.

Preferably, aside from the image matching process, the position information of the prior left lower leg convex hull may also be considered so that it is possible to get a current left lower leg convex hull in the current frame which is not only more similar to the prior left lower leg convex hull but also has a suitable position. For example, in this case, since the prior left lower leg convex hull is focused on, it is possible to consider a current limb convex hull in the current frame which is located below the current torso portion therein and has a relatively large similarity. That is, if a current limb convex hull having a higher similarity is not located below the current torso portion, for example, by the side of the current torso portion, then the current limb convex hull may be an upper or lower arm convex hull, i.e., may not be a lower leg convex hull because in general, when the pedestrian walks, his/her lower leg may not move to the side of his/her torso portion. As such, if the position information of the prior limb convex hulls in the prior frame is further taken into account, it is possible to more accurately obtain really matched current limb convex hulls in the current frame so as to determine their positions in the current frame.

After that, the position of the pedestrian is determined on the basis of the matched current limb convex hulls of the pedestrian in the current frame (STEP S105 of FIG. 4). Of course, in order to determine the position of the pedestrian, it is not necessary to use all the matched current limb convex hulls of the pedestrian in the current frame. In general, by utilizing one or more limb convex hulls, for example, the convex hulls corresponding to the left lower leg, the left foot, and the left arm of the pedestrian, it is possible to obtain his/her position in the current frame. In this way, it is possible to speed up the pedestrian detection and tracking process. Again, for example, by using the convex hulls corresponding to the right lower leg, the right foot, and the right arm of the pedestrian, it is possible to acquire his/her position in the current frame. Especially in a case where the speed of the pedestrian detection and tracking process needs to be first considered, by utilizing only the convex hulls of the right lower leg and the right foot of the pedestrian, it is also possible to determine his/her position in the current frame, so that pedestrian detection and tracking process may be further speeded up.

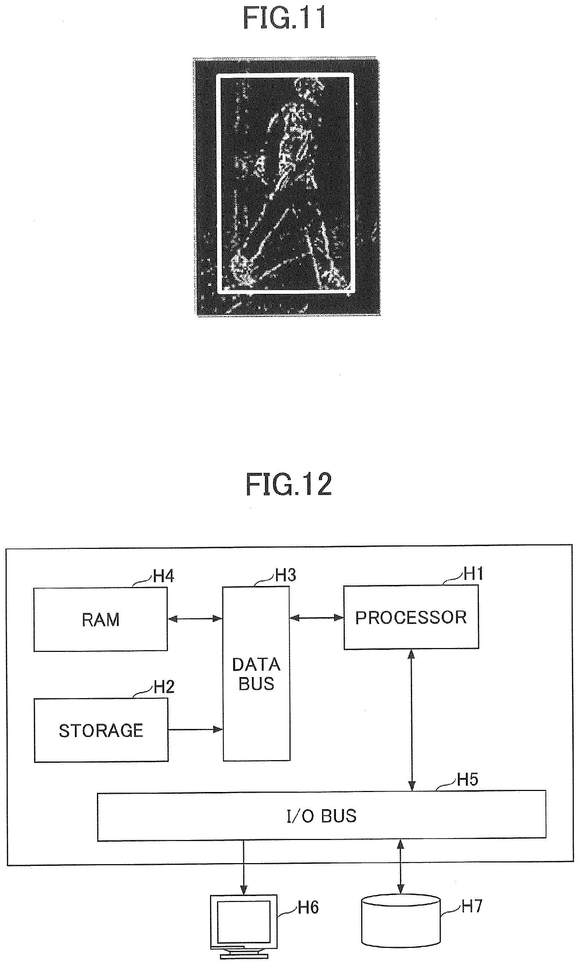

FIG. 11 illustrates a result obtained by detecting the pedestrian in the current image.

In FIG. 11, the updated pedestrian template is presented. As such, on the grounds of the updated pedestrian template, it is possible to know the newest state of the pedestrian in the current frame so that it is possible to solve the problem that the shape and the size of the pedestrian in the related image may change, and it is also possible to reduce the calculation amount and save the calculation cost and time.

FIG. 12 illustrates a computer system which may be applied to the embodiments of the present disclosure.

As presented in FIG. 12, the computer system includes a processor H1 and a storage H2 which is connected to the processor H1 and stores computer-executable instructions. The computer-executable instructions, when executed by the processor H1, may cause the processor H1 to carry out the steps of the object tracking method shown in FIG. 4. Here it should be noted that since the steps of the object tracking method have been depicted in detail above, the repeated descriptions are omitted for the sake of convenience.

The processor H1 may include one or more processors, microprocessors, etc. And the storage H2 may include but is not limited to a RAM (Random Access Memory), a ROM (Read-Only Memory), a flash memory, an EPROM (Erasable Programmable Read-Only Memory), an EEPROM (Electrically Erasable Programmable Read-Only Memory), a register, a hard disk, a floppy disk, a CD-ROM (Compact Disc Read-Only Memory), a DVD-ROM (Digital Versatile Disk Read-Only Memory), etc.

Furthermore the computer system presented in FIG. 12 may also include a data bus H3, a RAM H4, an I/O (Input/Output) bus H5, a display H6, and a peripheral device which may be conventional ones, for example.

Up to here, the preferred embodiments of the present disclosure have been illustrated in detail. However, it should be noted that the above embodiments are just exemplary ones, and the specific structure and operation of them may not be used for limiting the present disclosure.

Moreover, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G-compliant phone) and so on. Since the embodiments of the present disclosure can be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by those people skilled in the art without departing from the basic concept and technical scope of the present disclosure.

**Claims**

1. A method for tracking an object in a disparity map, comprising:

   extracting (S101), from the disparity map, prior convex hulls in an object template of a prior frame, the prior convex hulls including at least a prior torso convex hull and prior limb convex hulls;
   detecting (S102) a portion corresponding to the prior torso convex hull, in a current frame so as to serve as a current torso portion;
   extracting (S103) current limb convex hulls from a surrounding region of the current torsos portion in the current frame;
   for each of the prior limb convex hulls, rotating (S104), based on principal gradient directions of the current limb convex hulls and the prior limb convex hulls computed on a grayscale image corresponding to the disparity map, each of the current limb convex hulls so as to let the principal gradient direction of the current limb convex hull be consistent with the principal gradient direction of the corresponding prior limb convex hull;
   seeking rotated current limb convex hulls matching the prior limb convex hulls, respectively; and
   determining (S105), based on the matching results, an object template in the current frame so as to achieve object tracking.

2. The method according to claim 1, wherein the convex hulls are extracted by carrying out:

   extracting connected components from the disparity map;
   for each of the connected components, extracting its outline;
   for each of the outlines of the connected components, obtaining, based on a grayscale value of each pixel on the corresponding outline in the corresponding grayscale image, a grayscale-related gradient of each pixel on the corresponding outline;
   dividing a space relevant to each of the connected components into subspaces;
   for each of the subspaces relevant to each of the connected components, counting a number of pixels whose grayscale-related gradients are within the corresponding subspace;
   for each of the connected components, selecting a subspace having the maximum number of pixels to serve as a principal gradient direction of the corresponding connected component;
   taking out the connected components on the basis of the principal gradient directions so that each of the connected components has only one principal gradient direction; and
   respectively extracting, based on the principal gradient directions of the connected components, the convex hulls from the connected components, so as to let each of the convex hulls have only one principal gradient direction.

3. The method according to claim 1 or 2, wherein the detection step incudes:

   determining, based on a distance of the prior torso convex hull in a corresponding disparity map, a region of interest in the current frame, the distance of the region of interest and the distance of the prior torso convex hull being less than a first predetermined threshold; and
   detecting, based on a color template, a portion in the region of interest of the current frame, matching the prior torso convex hull so as to serve as the current torso portion.

4. The method according to claim 1, 2 or 3, wherein the rotation step includes:

   determining, based on a distance of each of the prior limb convex hulls in the disparity map, a region of interest in the current frame, a distance of the region of interest and the distance of each of the prior limb convex hulls being less than a second predetermined threshold; and
   for each of the prior limb convex hulls, rotating a principal gradient direction of each of the current convex hulls in the region of interest of the current frame so as to be consistent with a principal gradient direction of the corresponding prior limb convex hull.

5. The method according to any one preceding claim, wherein the seeking step includes:
   for each of the prior limb convex hulls, finding a rotated current limb convex hull matching the corresponding prior limb convex hull by taking into account a position of the corresponding prior limb convex hull, a position of the rotated current limb convex hull being located within a range that the corresponding prior limb convex hull may move therein.

6. The method according to any one preceding claim, wherein the rotation step is carried out in a two-dimensional space or a three-dimensional space.

7. The method according to any one preceding claim, wherein the object template in the current frame is determined based on at least one of the matching results.

8. A device for tracking an object in a disparity map, comprising an extractor, a detector, a matcher, and a determiner, wherein:

   the extractor is configured to extract, from the disparity map, prior convex hulls in an object template of a prior frame, the prior convex hulls including at least a prior torso convex hull and prior limb convex hulls;
   the detector is configured to detect a portion corresponding to the prior torso convex hull, in a current frame so as to serve as a current torso portion;
   the extractor is further configured to extract current limb convex hulls from a surrounding region of the current torsos portion in the current frame;
   the matcher is configured, for each of the prior limb convex hulls, to rotate, based on principal gradient directions of the current limb convex hulls and the prior limb convex hulls computed on the grayscale image corresponding to the disparity map, each of the current limb convex hulls to let the principal gradient direction of the current limb convex hull be consistent with the principal gradient direction of the corresponding prior limb convex hull so as to seek a rotated current limb convex hull matching the corresponding prior limb convex hull; and
   the determiner is configured to determine, based on the matching results, an object template in the current frame so as to achieve object tracking.

9. A system for tracking an object in a disparity map, comprising:

   a processor; and
   a storage connected to the processor, storing computer-executable instructions which, when executed, cause the processor to carry out the method according to claim 1.

10. A computer program comprising instructions which, when the program is executed by a computer, cause the computer to carry out the method of claim 1.

11. A non-transitory computer-readable medium storing computer-executable instructions for execution by a processing system, wherein, the computer-executable instructions, when executed, cause the processing system to carry out the method according to claim 1.

**Patentansprüche**

1. Verfahren zum Verfolgen eines Objekts in einer Disparitätskarte, umfassend:

   Extrahieren (S 101) von vorherigen konvexen Hüllen in einer Objektschablone eines vorherigen Einzelbildes aus der Disparitätskarte, wobei die vorherigen konvexen Hüllen mindestens eine vorherige konvexe Rumpfhülle und vorherige konvexe Gliedmaßenhüllen einschließen;
   Ermitteln (S102) eines der vorherigen konvexen Rumpfhülle entsprechenden Abschnitts in einem aktuellen Einzelbild, um als aktueller Rumpfabschnitt zu dienen;
   Extrahieren (S103) aktueller konvexer Gliedmaßenhüllen aus einem umgebenden Bereich des aktuellen Rumpfabschnitts im aktuellen Einzelbild;
   für jede der vorherigen konvexen Gliedmaßenhüllen erfolgendes Drehen (S104) jeder der aktuellen konvexen Gliedmaßenhüllen auf der Grundlage von Hauptgradientenrichtungen der aktuellen konvexen Gliedmaßenhüllen und der vorherigen konvexen Gliedmaßenhüllen, die auf einem der Disparitätskarte entsprechenden Graustufenbild berechnet wurden, um die Hauptgradientenrichtung der aktuellen konvexen Gliedmaßenhülle mit der Hauptgradientenrichtung der entsprechenden vorherigen konvexen Gliedmaßenhülle konsistent sein zu lassen;
   Suchen nach gedrehten aktuellen konvexen Gliedmaßenhüllen, die jeweils mit den vorherigen konvexen Gliedmaßenhüllen übereinstimmen; und

auf den Übereinstimmungsergebnissen beruhendes Bestimmen (S105) einer Objektschablone im aktuellen Einzelbild, um Objektverfolgung zu erzielen.

2. Verfahren nach Anspruch 1, worin die konvexen Hüllen durch Ausführen von Folgendem extrahiert werden:

Extrahieren von verbundenen Bestandteilen aus der Disparitätskarte;
für jeden der verbundenen Bestandteile erfolgendes Extrahieren seines Umrisses;
für jeden der Umrisse der verbundenen Bestandteile erfolgendes Erlangen eines graustufenbezogenen Gradienten jedes Pixels auf dem entsprechenden Umriss auf der Grundlage eines Graustufenwerts jedes Pixels auf dem entsprechenden Umriss in dem entsprechenden Graustufenbild;
Unterteilen eines Raums, der für jeden der verbundenen Bestandteile relevant ist, in Teilräume;
für jeden der Teilräume, die für jeden der verbundenen Bestandteile relevant sind, erfolgendes Zählen einer Anzahl von Pixeln, deren graustufenbezogene Gradienten innerhalb des entsprechenden Teilraums liegen;
für jeden der verbundenen Bestandteile erfolgendes Auswählen eines Teilraums, der die maximale Anzahl von Pixeln aufweist, um als Hauptgradientenrichtung des entsprechenden verbundenen Bestandteils zu dienen;
auf den Hauptgradientenrichtungen beruhendes Entnehmen der verbundenen Bestandteile, sodass jeder der verbundenen Bestandteile nur eine Hauptgradientenrichtung hat; und
jeweils auf den Hauptgradientenrichtungen der verbundenen Bestandteile beruhendes Extrahieren der konvexen Hüllen aus den verbundenen Bestandteilen, um jede der konvexen Hüllen nur eine Hauptgradientenrichtung haben zu lassen.

3. Verfahren nach Anspruch 1 oder 2, worin der Ermittlungsschritt umfasst:

auf einem Abstand der vorherigen konvexen Rumpfhülle in einer entsprechenden Disparitätskarte beruhendes Bestimmen eines interessierenden Bereichs im aktuellen Einzelbild, wobei der Abstand des interessierenden Bereichs und der Abstand der vorherigen konvexen Rumpfhülle kleiner als ein erster vorbestimmter Schwellenwert sind; und
auf einer Farbschablone beruhendes Ermitteln eines Abschnitts im interessierenden Bereich des aktuellen Einzelbildes, der mit der vorherigen konvexen Rumpfhülle übereinstimmt, um als der aktuelle Hüllenabschnitt zu dienen.

4. Verfahren nach Anspruch 1, 2 oder 3, worin der Drehungsschritt umfasst:

auf einem Abstand jeder der vorherigen konvexen Gliedmaßenhüllen in der Disparitätskarte beruhendes Bestimmen eines interessierenden Bereichs im aktuellen Einzelbild, wobei der Abstand des interessierenden Bereichs und der Abstand jeder der vorherigen konvexen Gliedmaßenhüllen kleiner als ein zweiter vorbestimmter Schwellenwert sind; und
für jede der vorherigen konvexen Gliedmaßenhüllen erfolgendes Drehen einer Hauptgradientenrichtung jeder der aktuellen konvexen Hüllen im interessierenden Bereich des aktuellen Einzelbildes, sodass sie mit einer Hauptgradientenrichtung der entsprechenden vorherigen konvexen Gliedmaßenhülle konsistent ist.

5. Verfahren nach einem der vorhergehenden Ansprüche, worin der Suchschritt umfasst:
für jede der vorherigen konvexen Gliedmaßenhüllen erfolgendes Auffinden einer gedrehten aktuellen konvexen Gliedmaßenhülle, die mit der entsprechenden vorherigen konvexen Gliedmaßenhülle übereinstimmt, indem eine Position der entsprechenden vorherigen konvexen Gliedmaßenhülle berücksichtigt wird, wobei eine Position der gedrehten aktuellen konvexen Gliedmaßenhülle innerhalb eines Bereichs liegt, in dem die entsprechende vorherige konvexe Gliedmaßenhülle sich bewegen kann.

6. Verfahren nach einem der vorhergehenden Ansprüche, worin der Drehungsschritt in einem zweidimensionalen Raum oder einem dreidimensionalen Raum ausgeführt wird.

7. Verfahren nach einem der vorhergehenden Ansprüche, worin die Objektschablone im aktuellen Einzelbild auf der Grundlage von mindestens einem der Übereinstimmungsergebnisse bestimmt wird.

8. Vorrichtung zum Verfolgen eines Objekts in einer Disparitätskarte, umfassend einen Extraktor, einen Ermittler, einen Übereinstimmungsprüfer und einen Bestimmer, worin:

der Extraktor dafür konfiguriert ist, aus der Disparitätskarte vorherige konvexe Hüllen in einer Objektschablone eines vorherigen Einzelbildes zu extrahieren, wobei die vorherigen konvexen Hüllen mindestens eine vorherige konvexe Rumpfhülle und vorherige konvexe Gliedmaßenhüllen einschließen;

der Ermittler dafür konfiguriert ist, einen Abschnitt, welcher der vorherigen konvexen Rumpfhülle entspricht, in einem aktuellen Einzelbild zu ermitteln, um als aktueller Hüllenabschnitt zu dienen;

der Extraktor ferner dafür konfiguriert ist, aktuelle konvexe Gliedmaßenhüllen aus einem umgebenden Bereich des aktuellen Rumpfabschnitts im aktuellen Einzelbild zu extrahieren;

der Übereinstimmungsprüfer dafür konfiguriert ist, für jede der vorherigen konvexen Gliedmaßenhüllen auf der Grundlage von Hauptgradientenrichtungen der aktuellen konvexen Gliedmaßenhüllen und der vorherigen konvexen Gliedmaßenhüllen, die auf dem der Disparitätskarte entsprechenden Graustufenbild berechnet wurden, jede der aktuellen konvexen Gliedmaßenhüllen zu drehen, um die Hauptgradientenrichtung der aktuellen konvexen Gliedmaßenhülle mit der Hauptgradientenrichtung der entsprechenden vorherigen konvexen Gliedmaßenhülle konsistent sein zu lassen, um eine gedrehte aktuelle konvexe Gliedmaßenhülle zu suchen, die mit der entsprechenden vorherigen konvexen Gliedmaßenhülle übereinstimmt; und

der Bestimmer dafür konfiguriert ist, auf der Grundlage der Übereinstimmungsergebnisse eine Objektschablone im aktuellen Einzelbild zu bestimmen, um Objektverfolgung zu erzielen.

9. System zum Verfolgen eines Objekts in einer Disparitätskarte, umfassend:

einen Prozessor; und

einen mit dem Prozessor verbundenen Speicher, der computerausführbare Anweisungen speichert, die, wenn sie ausgeführt werden, den Prozessor veranlassen, das Verfahren nach Anspruch 1 auszuführen.

10. Computerprogramm mit Befehlen, die, wenn das Programm durch einen Computer ausgeführt wird, den Computer veranlassen, das Verfahren nach Anspruch 1 auszuführen.

11. Nichtflüchtiges computerlesbares Medium, das computerausführbare Befehle zur Ausführung durch ein Verarbeitungssystem speichert, worin die computerausführbaren Befehle, wenn sie ausgeführt werden, das Verarbeitungssystem veranlassen, das Verfahren nach Anspruch 1 auszuführen.

## Revendications

1. Procédé pour suivre un objet dans une carte de disparité, comprenant :

l'extraction (S101), à partir de la carte de disparité, d'enveloppes convexes antérieures dans un modèle d'objet d'une vue antérieure, les enveloppes convexes antérieures incluant au moins une enveloppe convexe de torse antérieure et des enveloppes convexes de membres antérieures ;

la détection (S102) d'une partie qui correspond à l'enveloppe convexe de torse antérieure, dans une vue actuelle de manière à ce qu'elle joue le rôle de partie de torse actuelle;

l'extraction (S103) d'enveloppes convexes de membres actuelles à partir d'une région avoisinante de la partie de torse actuelle dans la vue actuelle;

pour chacune des enveloppes convexes de membres antérieures, la rotation (S 104), sur la base de directions de gradient principales des enveloppes convexes de membres actuelles et des enveloppes convexes de membres antérieures qui sont calculées sur une image d'échelle de gris qui correspond à la carte de disparité, de chacune des enveloppes convexes de membres actuelles de manière à faire en sorte que la direction de gradient principale de l'enveloppe convexe de membres actuelle soit cohérente avec la direction de gradient principale de l'enveloppe convexe de membres antérieure correspondante ;

la recherche d'enveloppes convexes de membres actuelles soumises à rotation qui concordent respectivement avec les enveloppes convexes de membres antérieures ; et

la détermination (S 105), sur la base des résultats de concordance, d'un modèle d'objet dans la vue actuelle de manière à réaliser un suivi d'objet.

2. Procédé selon la revendication 1, dans lequel les enveloppes convexes sont extraites en mettant en oeuvre :

l'extraction de composants connectés à partir de la carte de disparité ;

pour chacun des composants connectés, l'extraction de son contour ;

pour chacun des contours des composants connectés, l'obtention, sur la base d'une valeur d'échelle de gris de chaque pixel sur le contour correspondant dans l'image d'échelle de gris correspondante, d'un gradient rapporté à l'échelle de gris de chaque pixel sur le contour correspondant ;

la division d'un espace qui est pertinent pour chacun des composants connectés selon des sous-espaces ;

pour chacun des sous-espaces qui sont pertinents pour chacun des composants connectés, le comptage d'un nombre de pixels dont des gradients rapportés à l'échelle de gris sont à l'intérieur du sous-espace correspondant ;

pour chacun des composants connectés, la sélection d'un sous-espace qui comporte le nombre de pixels maximum pour jouer le rôle de direction de gradient principale du composant connecté correspondant ;

le retrait des composants connectés sur la base des directions de gradient principales de telle sorte que chacun des composants connectés dispose de seulement une direction de gradient principale ; et

l'extraction, respectivement, sur la base des directions de gradient principales des composants connectés, des enveloppes convexes à partir des composants connectés de manière à faire en sorte que chacune des enveloppes convexes dispose de seulement une direction de gradient principale.

3. Procédé selon la revendication 1 ou 2, dans lequel l'étape de détection inclut :

la détermination, sur la base d'une distance de l'enveloppe convexe de torse antérieure dans une carte de disparité correspondante, d'une région d'intérêt dans la vue actuelle, la distance de la région d'intérêt et la distance de l'enveloppe convexe de torse antérieure étant inférieures à un premier seuil prédéterminé ; et

la détection, sur la base d'un modèle de couleur(s), d'une partie dans la région d'intérêt de la vue actuelle, qui concorde avec l'enveloppe convexe de torse antérieure de manière à ce qu'elle joue le rôle de partie de torse actuelle.

4. Procédé selon la revendication 1, 2 ou 3, dans lequel l'étape de rotation inclut :

la détermination, sur la base d'une distance de chacune des enveloppes convexes de membres antérieures dans la carte de disparité, d'une région d'intérêt dans la vue actuelle, une distance de la région d'intérêt et la distance de chacune des enveloppes convexes de membres antérieures étant inférieures à un second seuil prédéterminé ; et

pour chacune des enveloppes convexes de membres antérieures, la rotation d'une direction de gradient principale de chacune des enveloppes convexes actuelles dans la région d'intérêt de la vue actuelle de manière à ce qu'elle soit cohérente avec une direction de gradient principale de l'enveloppe convexe de membres antérieure correspondante.

5. Procédé selon l'une quelconque des revendications qui précèdent, dans lequel l'étape de recherche inclut :
pour chacune des enveloppes convexes de membres antérieures, l'obtention d'une enveloppe convexe de membres actuelle soumise à rotation qui concorde avec l'enveloppe convexe de membres antérieure correspondante en prenant en compte une position de l'enveloppe convexe de membres antérieure correspondante, une position de l'enveloppe convexe de membres actuelle soumise à rotation étant localisée à l'intérieur d'une plage au sein de laquelle l'enveloppe convexe de membres antérieure correspondante peut se déplacer.

6. Procédé selon l'une quelconque des revendications qui précèdent, dans lequel l'étape de rotation est mise en oeuvre dans un espace bidimensionnel ou dans un espace tridimensionnel.

7. Procédé selon l'une quelconque des revendications qui précèdent, dans lequel le modèle d'objet dans la vue actuelle est déterminé sur la base d'au moins l'un des résultats de concordance.

8. Dispositif pour suivre un objet dans une carte de disparité, comprenant un extracteur, un détecteur, un moyen de mise en concordance et un moyen de détermination, dans lequel :

l'extracteur est configuré de manière à ce qu'il extraie, à partir de la carte de disparité, des enveloppes convexes antérieures dans un modèle d'objet d'une vue antérieure, les enveloppes convexes antérieures incluant au moins une enveloppe convexe de torse antérieure et des enveloppes convexes de membres antérieures ;

le détecteur est configuré de manière à ce qu'il détecte une partie qui correspond à l'enveloppe convexe de torse antérieure, dans une vue actuelle de manière à ce qu'elle joue le rôle de partie de torse actuelle ;

l'extracteur est en outre configuré de manière à ce qu'il extraie des enveloppes convexes de membres actuelles à partir d'une région avoisinante de la partie de torse actuelle dans la vue actuelle ;

le moyen de mise en concordance est configuré pour, pour chacune des enveloppes convexes de membres antérieures, soumettre à rotation, sur la base de directions de gradient principales des enveloppes convexes de membres actuelles et des enveloppes convexes de membres antérieures qui sont calculées sur l'image d'échelle de gris qui correspond à la carte de disparité, chacune des enveloppes convexes de membres actuelles de manière à faire en sorte que la direction de gradient principale de l'enveloppe convexe de membres actuelle soit cohérente avec la direction de gradient principale de l'enveloppe convexe de membres antérieure correspondante de manière à rechercher une enveloppe convexe de membres actuelle soumise à rotation qui concorde avec l'enveloppe convexe de membres antérieure correspondante ; et

le moyen de détermination est configuré pour déterminer, sur la base des résultats de concordance, un modèle d'objet dans la vue actuelle de manière à réaliser un suivi d'objet.

9. Système pour suivre un objet dans une carte de disparité, comprenant :

un processeur ; et
un moyen de stockage connecté au processeur, qui stocke des instructions qui peuvent être exécutées par un ordinateur et qui, lorsqu'elles sont exécutées, forcent le processeur à mettre en oeuvre le procédé selon la revendication 1.

10. Programme informatique comprenant des instructions qui, lorsque le programme est exécuté par un ordinateur, forcent l'ordinateur à mettre en oeuvre le procédé selon la revendication 1.

11. Support non transitoire pouvant être lu par un ordinateur et stockant des instructions qui peuvent être exécutées par un ordinateur et qui sont destinées à être exécutées par un système de traitement, dans lequel les instructions qui peuvent être exécutées par un ordinateur, lorsqu'elles sont exécutées, forcent le système de traitement à mettre en oeuvre le procédé selon la revendication 1.

# FIG.1

# FIG.2

CHIP

RIGHT AND LEFT IMAGES

TWO-LENS CAMERA

# FIG.3

PRIOR PEDESTRIAN TEMPLATE

DISPARITY MAP AND GRAYSCALE IMAGE OF CURRENT FRAME

102 CPU

MEMORY 101

REGION OF INTEREST

103 EXTRACTOR

107 UPDATER

PRIOR TORSO CONVEX HULL

PRIOR LIMB CONVEX HULLS

CURRENT LIMB CONVEX HULLS

104 DETECTOR

105 MATCHER

106 DETERMINER

PEDESTRIAN DETECTED IN CURRENT FRAME

EP 3 147 820 B1

# FIG.4

PRIOR
PEDESTRIAN
TEMPLATE

DISPARITY MAP
AND GRAYSCALE
IMAGE OF
CURRENT FRAME

S101

EXTRACT PRIOR CONVEX HULLS
IN PRIOR PEDESTRIAN TEMPLATE

S102

DETECT CURRENT TORSO PORTION
IN CURRENT FRAME

S103

EXTRACT CURRENT LIMB CONVEX HULLS
IN CURRENT FRAME

S104

ROTATE CURRENT LIMB CONVEX HULLS
TO LET THEIR PRINCIPAL GRADIENT DIRECTIONS
BE THE SAME AS PRINCIPAL GRADIENT DIRECTION
OF EACH PRIOR LIMB CONVEX HULL SO AS TO
FIND ROTATED CURRENT LIMB CONVEX HULL
MATCHING EACH PRIOR LIMB CONVEX HULL

S105

DETERMINE PEDESTRIAN
IN CURRENT FRAME

S106

UPDATE PRIOR
PEDESTRIAN TEMPLATE

PEDESTRIAN
DETECTED IN
CURRENT FRAME

# FIG.5

INPUT DEVICE ⟍1100

PEDESTRIAN TRACKING DEVICE

OUTPUT DEVICE ⟍1400

PRIOR PEDESTRIAN TEMPLATE ⟍S41

EXTRACTOR ⟍S43

DETECTOR ⟍S44

DISPARITY MAP AND GRAYSCALE IMAGE OF CURRENT FRAME ⟍S42

MATCHER ⟍S45

DETERMINER ⟍S46

DETECTED PEDESTRIAN ⟍S47

UPDATER ⟍S48

# FIG.6

# FIG.7

DISPARITY MAP

~102

CPU

~101

MEMORY

~1031

FIRST MODULE

CONNECTED
COMPONENT

~1032

SECOND MODULE

OUTLINE

~1033

THIRD MODULE

PRINCIPAL GRADIENT
DIRECTION

~1034

FORTH MODULE

CONVEX HULL

FIG.8A

FIG.8B

FIG.8C

FIG.8D

FIG.9A

FIG.9B

FIG.10

# FIG.11

# FIG.12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Object Tracking: A survey. **ALPER YILMAZ et al.** ACM Computing Surveys. ACM, 25 December 2006, vol. 38, 13
- Video Analysis of Human Dynamics- a Survey. **WAN JJ et al.** Real-Time Imagine. Academic Press Limited, 01 October 2003, vol. 9

- **ANONYMOUS.** *Difference Between Disparity Maps and Disparity Image in Stereo Matching,* 12 July 2013, http://stackoverflow.com/questions/17607312/difference-between-disparity-map-and-disparity-image-in-stereo-matching